# EUROPÄISCHE PATENTSCHRIFT

(11) **EP 0 801 759 B1**
(45) Veröffentlichungstag und Bekanntmachung des Hinweises auf die Patenterteilung: **08.08.2001**
(21) Anmeldenummer: 95908872.5
(22) Anmeldetag: 01.02.1995
(51) Int. Cl.: G02B 21/00, G01N 21/64

(54) **VORRICHTUNG UND VERFAHREN ZUM OPTISCHEN MESSEN EINES PROBENPUNKTES EINER PROBE MIT HOHER ORTSAUFLÖSUNG**
PROCESS AND DEVICE FOR OPTICALLY MEASURING A POINT ON A SAMPLE WITH HIGH LOCAL RESOLUTION
DISPOSITIF ET PROCEDE POUR LA MESURE OPTIQUE D'UN POINT SUR UN ECHANTILLON, AVEC HAUTE RESOLUTION LOCALE

(30) Priorität: 01.02.1994 DE 4403027; 11.05.1994 DE 4416558
(43) Veröffentlichungstag der Anmeldung: 22.10.1997
(73) Patentinhaber: Hell, Stefan, Dr., 37073 Göttingen (DE)
(72) Erfinder: Hell, Stefan, Dr., 37073 Göttingen (DE); Wichmann, Jan, 67661 Kaiserslautern (DE)
(74) Vertreter: Patentanwälte Rehberg + Hüppe
(86) Internationale Anmeldenummer: DE9500124
(87) Internationale Veröffentlichungsnummer: WO9521393

(56) Entgegenhaltungen:
- WO-A-91/07651
- DE-A- 3 831 880
- OPTICS LETTERS, Bd.19, Nr.11, 1. Juni 1994, WASHINGTON US Seiten 780 - 782 S.W.HELL ET AL. 'Breaking the diffraction resolution limit by stimulated emission: stimulated-emission-depletion fluorescence microscopy'
- APPLIED PHYSICS B. PHOTOPHYSICS AND CHEMISTRY, Bd.60, Nr.5, Mai 1995, HEIDELBERG DE Seiten 495 - 497 S.W.HELL ET AL. 'Ground-state depletion fluorescence microscopy: a concept for breaking the diffraciton resolution limit'

## Beschreibung

Die Erfindung betrifft eine Vorrichtung zum optischen Messen eines Probenpunktes einer Probe mit hoher Ortsauflösung, mit einer Lichtquelle zum Aussenden eines zum Anregen eines Energiezustandes der Probe geeigneten Anregungslichtstrahls, einem Objektiv zum Fokussieren des Anregungslichtstrahls auf den Probenpunkt, der im Fokalbereich des Objektivs anordenbaren Probe, einer Separationseinrichtung zum Herausseparieren des von der Probe aufgrund der Anregung des Energiezustandes spontan abgestrahlten Emissions ichts und einem Detektor zum Nachweis des spontan abgestrahlten Emissionslichts.

Ferner betrifft die Erfindung ein Verfahren zum optischen Messen eines Probenpunktes einer Probe mit hoher Ortsauflösung, bei dem ein Anregungslichtstrahl auf den zu messenden Probenpunkt mittels eines Objektivs fokussiert wird und dort den Energiezustand anregt, und bei dem das von dem Probenpunkt aufgrund der Anregung des Energiezustands spontan emittierte Emissionslicht heraussepariert und nachgewiesen wird.

Eine solche Vorrichtung und ein solches Verfahren sind aus der Praxis bekannt. Sie finden ihre Anwendung z. B. bei Mikroskopen und insbesondere bei Rastermikroskopen. Mit einem Rastermikroskop werden einzelne Probenpunkte abgetastet und gemessen. Auf diese Weise kann die Probe dreidimensional vermessen werden. Es werden lumineszierende, insbesondere fluoreszierende oder phosphoreszierende Proben oder mit entsprechenden Farbstoffen versehene Proben verwendet.

Bei einer solchen Verrichtung und einem solchen Verfahren ist es wünschenswert, eine gute Ortsauflösung zu erreichen. Die Ortsauflösung ist durch die räumliche Ausdehnung der sogenannten effektiven Punktabbildungsfuktion gegeben. Diese ist eine ortsabhängige Funktion, die die Wahrscheinlichkeit quantifiziert, mit der aus einem bestimmten Punkt des Fokalbereichs ein Photon spontan emittiert wird. Sie ist mit der räumlichen Verteilung der Wahrscheinlichkeit, daß an einem bestimmten Punkt des Fokalbereichs der Energiezustand angeregt ist, identisch. Bei herkömmlichen Floureszenzmikroskopen ist die effektive Punktabbildungsfuktion identisch mit der Punktabbildungsfunktion des Objektivs bei der Wellenlänge des Anregungslichts, welche die Intensitatsverteilung des Anregungslichts im Fokalbereich des Objektivs angibt und aus quantenmechanischer Sicht die Wahrscheinlichkeit quantifiziert, mit der ein Beieuchtungsphoton in einem bestimmten Punkt des Fokalbereichs anzutreffen ist. Bei einem Rastermikroskop ist die Unterteilung der Rasterung durch die Ortsauflösung begrenzt. Bei einer besseren Ortsauflösung kann daher eine feinere Unterteilung gewählt werden, mit der eine bessere Auflösung des rekonstruierten Bildes erzielt werden kann.

Es ist bekannt, daß bei einem Rastermikroskop die Auflösung dadurch verbessert werden kann, daß das von der Probe emittierte Licht auf den Punktdetektor abgebildet wird, der in einer zu der Fokalebene des Objektivs konjugierten Ebene angeordnet ist. Eine solche Anordnung wird als konfokale Anordnung bezeichnet. Die bessere Auflösung kommt dadurch zustande, daß zwei Punktabbildungsfunktionen die Abbildung im konvokalen Rastermikroskop bestimmen: Die effektive Punktabbildungsfunktion und die Detektionsabbildungsfunktion, welche die Abbildung des von der Probe emittierten, zu detektierenden Lichts in den Punktdetektor beschreibt und aus quantenmechanischer Sicht die Wahrscheinlichkeit quantifiziert, mit der ein aus dem Fokalbereich emittiertes Photon in den Punktdetektor gelangt. Da sowohl Beleuchtung und Detektion stattfinden müssen, ist die Punktabbildungsfunktion eines konfokalen Rastermikroskops das Produkt aus beiden Wahrscheinlichkeitsverteilungen, d. h. aus der effektiven Punkt-Abbildungsfunktion und der Detektionspunkt-Abbildungsfunktion. Dies führt zu einem deutlich schmaleren Hauptmaximum der konfokalen Punktabbildungsfunktion im Vergleich zu einem nicht konfokal angeordneten Mikroskop. Dies entspricht einer höheren Auflösung des konfokalen Mikroskops und bewirkt eine Diskriminierung aller Punkte, die sich nicht in der unmittelbaren Umgebung des Fokus befinden. Letzteres ist Voraussetzung für die Erstellung dreidimensionaler Bilder im Rasterverfahren.

Aus der DE 38 31 880 A1 ist ein Verfahren zur Untersuchung ultraschneller Vorgänge in mikroskopischen Proben bekannt. Hierzu wird die Probe zunächst mit einem ersten Laserstrahl angeregt. Anschließend wird ein Teststrahl, der sich in mindestens einem Parameter von dem ersten Laserstrahl unterscheidet, auf die Probe gerichtet und es wird die Veränderung des Teststrahls durch die Probe beobachtet. Das bekannte Verfahren wird mit einem Laser-Raster-Mikroskop durchgeführt.

Der Erfindung liegt die Aufgabe zugrunde, die gattungsgemäße Vorrichtung und das gattungsgemäße Verfahren derart zu verbessern, daß eine größere Ortsauflösung erzielt wird.

Hinsichtlich der Vorrichtung wird diese Aufgabe erfindungsgemäß durch die Merkmale des Anspruchs 1 gelöst.

Hinsichtlich des Verfahrens wird die Aufgabe erfindungsgemäß durch die Merkmale des Anspruchs 22 gelöst.

Durch die durch den Stimulationslichtstrahl induzierte stimulierte Emission der von dem Anregungslichtstrahl angeregten Probe in dem Deckungsbereich der Intensitätsverteilungen des Anregungslichts und des Stimulationslichts im Fokalbereich des Objektivs wird bewirkt, daß die angeregten Energiezustände im Deckungsbereich abgeregt werden und nicht mehr zu der zu detektierenden spontan emittierten Strahlung beitragen können. Die effektive Punktabbildungsfunktion, die im normelen Fluoreszenzmikroskop identisch mit der Punktabbildungs- funktion des Objektivs bei der Wellenlänge des Anregungslichts ist, wird dadurch verschmälert. Dies entspricht einer erhöhten räumlichen Auflösung. Die Verbesserung der Ortsauflösung ist von der Art der Deckung der Intensitätsverteilungen abhängig. Es kann sowohl eine laterale als auch eine axiale Verbesserung in der Ortsauflösung erzielt werden.

Gemäß einer Weiterbildung der Erfindung ist es vorteilhaft, wenn die Probe auf einem Positioniertisch angeordnet ist, mit dem eine mechanische Rasterbewegung zumindest in Richtung der optischen Achse durchführbar ist. Die Vorrichtung entspricht dann einem Rastermikroskop, bei dem die Probe zumindest entlang der optischen Achse abgerastert werden kann. In diesem Fall ist eine Verbesserung der Ortsauflösung in axialer Richtung besonders vorteilhaft, da dann in dieser Richtung durch feineres Rastern eine bessere Auflösung erzielt werden kann. Ein weiterer Vorteil kann erreicht werden, wenn zwischen der Lichtquelle und dem Objektiv eine Strahlrastereinrichtung zum gesteuerten Abrastern der Probe mit dem Anregungslichtstrahl und dem Stimulationslichtstrahl vorgesehen ist. Die Vorrichtung wird als Rastermikroskop verwendet, bei dem die Probe lateral oder dreidimensional abgerastert werden kann. Bei einem solchen Rastermikroskop kann dann durch Verkleinern der Rasterung auch in der lateralen Richtung eine bessere Ortsauflösung erzielt werden.

Ferner ist es vorteilhaft, wenn der Stimulationslichtstrahl hinsichtlich des Anregungslichtstrahls in der Fokalebene lateral versetzt ist. Durch diese Anordnung wird eine Verschmälerung der effektiven Punktabbildungsfunktion der Vorrichtung in lateraler Richtung bewirkt. Auch kann es günstig sein, wenn der Stimulationslichtstrahl hinsichtlich des Anregungslichtstrahls entlang der optischen Achse versetzt ist. Dann wird eine Verbesserung der Ortsauflösung der Vorrichtung in axialer Richtung bewirkt.

Vorteilhafterweise kann wenigstens ein weiterer von der Lichtquelle kommender Stimulationslichtstrahl vorgesehen sein, dessen Intensitätsverteilung im Fokalbereich des Objektivs von der Intensitätsverteilung der übrigen Stimulationsstrahlen verschieden ist. Bei dieser Anordnung werden die Intensitätsverteilungen der zusätzlichen Stimulationsstrahlen ebenfalls der Intensitätsverteilung des Anregungslichtstrahis im Fokalbereich des Objektivs überlagert, wodurch eine weitere Verschmälerung der effektiven Punktabbildungsfunktion der Vorrichtung erzielt wird. Die Art der Verschmälerung der effektiven Punktabbildungsfunktion kann durch die räumliche Anordnung der Stimulationslichtstrahlen entsprechend gewählt werden. Günstigerweise können die Stimulationslichtstrahlen hinsichtlich des Anregungslichtstrahls räumlich symmetrisch angeordnet werden. Dann wird eine räumlich symmetrische Verschmälerung des Hauptmaximums der effektiven Punktabbildungsfunktion im Fokalbereich erzielt. Z. B. können die Stimulationslichtstrahlen derart angeordnet werden, daß sie durch einen zu dem Anregungslichtstrahl konzentrischen Kreisring verlaufen. Dabei können die Stimulationsstrahlen zueinander jeweils einen gleichen Abstand aufweisen. Auf diese Weise wird das Hauptmaximum der Intensitätsverteilung des Anregungslichtstrahls sozusagen von mehreren Seiten gleichmäßig verschmälert. Auch weitere Anordnungen der Stimulationslichtstrahlen sind möglich und die genaue Auswahl der Anordnung ist dem Fachmann überlassen.

Gemäß einer günstigen Weiterbildung der Erfindung kann die Lichtquelle einen Laser umfassen, der Lichtanteile unterschiedlicher Wellenlängen emittiert. Das Licht der einen Wellenlänge wird dann als Anregungslicht verwendet. Die Wellenlänge des Lichtes ist dabei so zu wählen, daß der Energiezustand der Probe damit angeregt werden kann. Der Lichtanteil mit der anderen Wellenlänge wird für das Stimulationslicht gewählt. Die Wellenlänge muß so gewählt sein, daß die Probe in dem angeregten Zustand über stimulierte Emission abgeregt werden kann. Im Normalfall sind die für das Anregungslicht und das Stimulationslicht erforderlichen Wellenlängen voneinander verschieden. Für den Fall, daß diese Wellenlängen gleich sind, genügt es selbstverständlich, einen Laser zu verwenden, der nur eine Wellenlänge emittiert.

Auch kann es vorteilhaft sein, wenn die Lichtquelle wenigstens zwei Laser umfaßt, die Licht unterschiedlicher Wellenlängen emittieren. Dann dient der eine Laser zum Erzeugen des Anregungslichtes und der/die andere/n Laser zum Erzeugen des Stimulationslichtes. Es können entweder mit einem Laser mehrere Stimulationslichtstrahlen erzeugt werden, was etwa durch eine geeignete Blende oder durch geeignetes Anordnen von Spiegeln möglich ist oder es können mehrere Laser zum Erzeugen je eines oder mehrerer Stimulationsstrahlen verwendet werden. Die Verwendung von Lasern als Lichtquelle hat ferner den Vorteil, daß räumlich stark lokalisierbare Lichtstrahlen mit hoher Intensität zur Verfügung stehen.

Günstigerweise kann ein Dauerstrichlaser vorgesehen sein, der das Anregungslicht aussendet. Durch das Verwenden von Dauerstrichlasern wird die Anordnung kostengünstig. Es kann wenigstens ein Laser vorgesehen sein, der Lichtpulse zeitlicher Abfolge aussendet. Günstigerweise erzeugt ein Laser, der Lichtpulse zeitlicher Abfolge aussendet, das Stimulationslicht.

Eine vorteilhafte Anordnung besteht darin, daß ein Dauerstrichlaser zum Erzeugen des Anregungslichtes und wenigstens ein Laser, der Lichtpulse in zeitlicher Abfolge ausstrahlt, zur Erzeugung des Stimulationslicht verwendet wird. Dabei wird die Zeit, innerhalb der das Lumineszenzlicht vom Detektor erfaßt werden soll, durch die Pulsdauer des Stimulationslichtes bestimmt. Dabei ist es vorteilhaft, wenn die Pulsdauer des Lasers, der das Stimulationslicht ausstrahlt, 10⁻¹⁰ bis 10⁻⁵ s beträgt.

Gemäß einer weiteren vorteilhaften Anordnung wird sowohl das Anregungslicht als auch das Stimulationslicht von Lasern erzeugt, die Lichtpulse in zeitlicher Abfolge aussenden. Die Pulsdauer des Anregungslichtes und des Stimulationslichtes sollen in diesem Fall kleiner sein als die charakteristischen Zeiten für die spontane Emission der Probe in dem angeregten Energiezustand. Die Pulsdauer des Stimulationslichts soll größer sein als die charakteristische Zeit für einen Zerfallsprozeß des Endzustandes, in dem sich die Probe nach Abregen des Energiezustandes durch stimulierte Emission befindet, in einen noch tiefer liegenden Grundzustand. Von letzterem aus wird die Probe typischerweise in den Energiezustand angeregt. Die Pulsdauer des Anregungslichtes beträgt vorteilhafterweise 10⁻¹⁵ bis 10⁻⁹s; die Pulsdauer des Stimulationslichtes beträgt günstigerweise 10⁻¹² bis 10⁻⁹s.

Vorteilhafterweise kann der Laser zur Erzeugung des Stimulationslichts einen Lichtstrahl mit gaußförmiger Intensitätsverteilung aussenden. Dadurch wird in der Fokaiebene ebenfalls eine gaußförmige räumliche Intensitätsverteilung erzielt. Eine solche Intensitätsverteilung hat den Vorteil, daß sie keine Nebenmaxima aufweist, durch welche die Auflösung verschlechtert werden könnte. Dies ist insbesondere bei den Stimulationsstrahlen vorteilhaft, da diese dem Anregungslichtstrahl dann so überlagert werden können, daß sie sich dem Hauptmaximum der Intensitätsverteilung des Anregungsstrahles lateral überlappen. In diesem Fall werden eventuell in der Intensitätsverteilung des Anregungslichtstrahls vorhandene Seitenmaxima aufgrund der Wirkung der Stimulationslichtstrahlen in der effektiven Punktabbildungfunktion eliminiert. Dabei können die Stimulationslichtstrahlen der Intensitätsverteilung des Anregungslichtstrahls von außen her überlagert werden, ohne daß in der effektiven Punktabbildungsfunktion neue Nebenmaxima entstehen. In diesem Fall wird eine deutliche Verschmälerung des Hauptmaximums der effektiven Punktabbildungsfunktion erzielt, ohne daß Nebenmaxima auftreten.

Auch ist es günstig, wenn die Lichtquelle zur Erzeugung der stimulierten Emission von hoher Intensität ist, so daß zwischen dieser Intensität und der Besetzung des Energiezustandes der Probe ein nichtlinearer Zusammenhang besteht. Dadurch kann mit dem Stimulationslichtstrahl der angeregte Energiezustand im Deckungsbereich der Intensitätsverteilung des Anregungs- und des Stimulationslichtes durch stimulierte Emission räumlich sehr scharf begrenzt abgeregt werden, so daß auch die effektive Punktabbildungsfunktion räumlich sehr scharf begrenzt wird und zugleich die Verminderung der gesamten Lumineszenzintensität minimiert wird.

Gemäß einem vorteilhaften Ausführungsbeispiel der Erfindung umfaßt die Separationseinrichtung eine Zeitsteuerungseinrichtung, mit der der Detektor unmittelbar nach Abklingen eines Pulses des Stimulationslichts eingeschaltet werden kann. Wenn bei dieser Anordnung sowohl zum Erzeugen des Anregungslichtes als auch zum Erzeugen des Separationslichtes Laser verwendet werden, die Lichtpulse zeitlicher Abfolge aussenden, kann die Zeitsteuereinrichtung auch die Laser derart steuern, daß ein Stimulationslichtpuls ausgesendet wird, sobald ein Anregungslichtpuls abgeklungen ist. Das Betätigen des Detektors nach Abklingen des Pulses des Stimulationslichtes kann dann mit der gleichen Zeitsteuerungseinrichtung erfolgen. Die bevorzugten Pulsdauern der Laser wurden oben bereits genannt. Es ist ein einfaches und sauberes Heraustrennen des Emissionlichts der Probe möglich, auch dann, wenn das Anregungslicht gleiche Wellenlänge wie das Emissionslicht hat. Der Aufbau der Vorrichtung wird mechanisch einfach, da keine weiteren Filterelemente verwendet werden müssen.

Gemäß einem anderen vorteilhaften Ausführungsbeispiel der Erfindung kann die Separationseinrichtung ein dem Objektiv vorgeschaltetes Polarisationselement zum Polarisieren des Stimulationslichts und ein dem Objektivs nachgeschaltetes Polarisationselement zum Polarisieren des zum Detektor gehenden Lichts mit einer orthogonalen Durchlaßrichtung zu der des dem Objektiv vorgeschalteten Polarisationselements umfassen. Vor-bzw. nachgeschaltet bedeutet hier sowohl räumlich als auch in Laufrichtung des Lichtes vor bzw. nach dem Objektiv. Dadurch ist es möglich, das Emissionlicht von dem Stimulationslicht bei gleichen Wellenlängen zuverlässig voneinander zu trennen. Es kann auch ein Polarisationselement zum Polarisieren des Anregungslichts dem Objektiv vorgeschaltet angeordnet sein und ein weiteres Polarisationselement dem Objektiv nachgeschaltet sein, welches zu dem Polarisationselement zum Polarisieren des zum Detektor gehenden Lichts eine orthogonale Durchlaßrichtung aufweist. So kann das von der Probe emittierte Licht auch von dem Anregungslicht getrennt werden. Auch ist es vorteilhaft, wenn die Separationseinrichtung wenigstens ein Wellenlängenfilter aufweist. Mit den Wellenlängenfiltern kann das von der Probe emittierte Licht von dem Anregungslicht heraussepariert werden, wenn unterschiedliche Wellenlängen vorliegen. Ein Wellenlängenfilter ist dem Objektiv nachgeschaltet. Als Welienlängenfilter können Farbfilter, dichroitische Filter, Monochromatoren, Prismen etc. verwendet werden. Ferner kann die Separationseinrichtung einen dichroitischen Spiegel aufweisen. Der Spiegel ist dann zwischen der Lichtquelle und dem Objektiv angeordnet, so daß das von der Probe emittierte Licht von dem dichroitischen Spiegel, wenn es eine bestimmte Wellenlänge aufweist, in den Detektor gelenkt wird.

Gemäß einer günstigen Weiterbildung der Erfindung kann der Detektor ein Punktdetektor sein. Dem Detektor kann ein Fokussierungselement und eine Blende vorgeschaltet sein, wobei die Biende in einer zur Fokalebene des Objektivs optisch konjugierten Ebene angeordnet ist. Die Blende ist beispielsweise eine Lochblende, wobei ihr Durchmesser vorzugsweise so groß ist, daß ihr Bild im Probenbereich in der Größenordnung der Ausdehnung der effektiven Punktabbildungsfunktion ist, das man bei der Wellenlänge des zu detektierenden Lichtes hat. Die Punktabbildungsfunktion der Vorrichtung ergibt sich aus dem Produkt der effektiven Punktabbildungsfunktion und der Detektionspunkt-Abbildungsfunktion. Aufgrund des Punktdetektors wird also eine zusätzliche Verschmälerung des Hauptmaximums der Punktabbildungsfunktion der Vorrichtung und damit eine weitere Verbesserung der Auflösung erzielt.

Eine weitere Verbesserung der Ortsauflösung der Vorrichtung kann dadurch erzielt werden, daß zwischen der Lichtquelle und dem Objektiv ein für die Wellenlänge des Stimulationslichts durchlässiges Filterelement angeordnet ist, welches für die Wellenlänge des Anregungslichts einen undurchlässigen Mittenbereich und einen durchlässigen Außenbereich aufweist. Ein solches Filterelement verlagert in der Intensitätsverteilung des Anregungslichtes im Fokalbereich Licht aus dem Hauptmaximum in die Beugungsnebenmaxima, wobei das Hauptmaximum deutlich verschmälert wird. Dies führt zu einer weiteren Verschmälerung der effektiven Punktabbildungsfuktion. Die Intensitätszunahme in den Nebenmaxima der Intensitätsverteilung des Anregungslichts ist in diesem Fall nicht störend, da diese aufgrund der Intensitätsverteilung des Stimulationslichts in der effektiven Punktabbildungsfunktion unterdrückt werden, da sich die Intensitätsverteilungen teilweise überlappen.

Im folgenden wird die Erfindung anhand der Zeichnung näher beschrieben. Es zeigen:
- Figur 1: ein schematische Darstellung eines Ausführungsbeispiels der erfindungsgemäßen Vorrichtung,
- Figur 2: ein Beispiel für die Intensitätsverteilung des Anregungslichts und für die Intensitätsverteilungen des Stimulationslichts in der Fokalebene des Objektivs der erfindungsgemäßen Vorrichtung und
- Figur 3: die effektive Punktabbildungsfunktion in der Fokalebene des Objektivs der erfindungsgemäßen Vorrichtung.

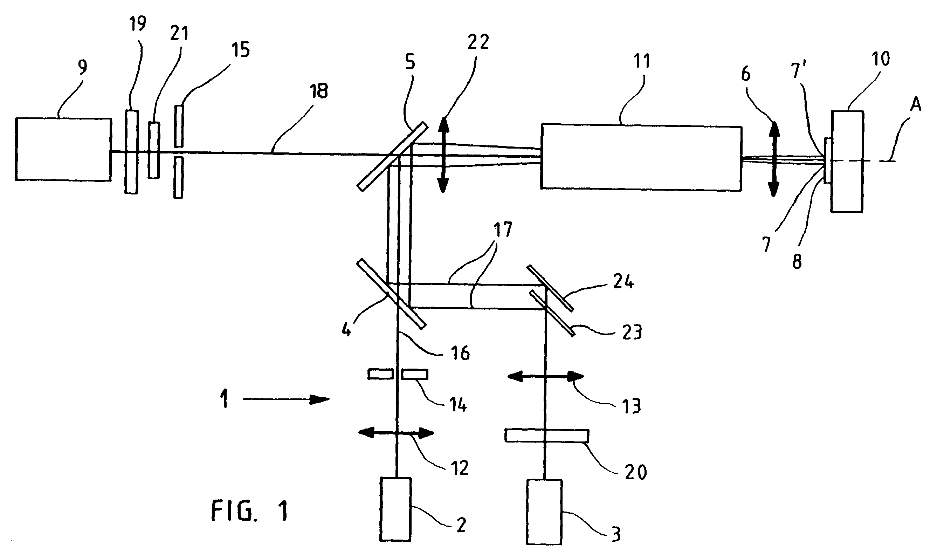

Figur 1 zeigt als Ausführungsbeispiel der erfindungsgemäßen Vorrichtung die Anordnung eines Rastermikroskops. Das Rastermikroskop umfaßt eine Lichtquelle 1 mit einem Laser 2 zum Aussenden von Anregungslicht und einem Laser 3 zum Aussenden von Stimulationslicht. Ferner sind dichroitische Spiegel 4 und 5 und ein Objektiv 6 vorgesehen, mit denen das von den Lasern 2 und 3 kommende Anregungslicht und Stimulationslicht auf einen Probenpunkt 7 der Probe 8 gelenkt bzw. fokussiert wird. Der Probenpunkt 7 hat dabei eine Ortsausdehnung, welche hier eine Flächenausdehnung ist. Ein Detektor 9 ist zum Nachweis des von der Probe 8 emittierten Emissionslichts angeordnet, welches mit dem dichroitischen Spiegel 5 aus dem Anregungslicht 18 heraussepariert wird. Die Probe ist auf einem Positioniertisch 10 angeordnet. Zwischen der Lichtquelle 1 und dem Objektiv 6 ist eine Strahlrastereinrichtung 11 zum gesteuerten Abrastern der Probe 8 mit dem Anregungslicht und dem Stimulationslicht vorgesehen. Die Lichtquelle 1 umfaßt zusätzlich zu den Lasern 2 und 3 Linsen 12 und 13 sowie eine Blende 14. Mit der Linse 12 wird der von dem Laser 2 kommende Laserstrahl auf die Blende 14 fokussiert. Die Linse 13 dient zur Anpassung der Divergenz des Anregungslichtstrahls und der Stimulaticnslichtstrahlen, damit sie in der gleichen Ebene mit Hilfe des Objektivs 6 fokussiert werden können. Als Blenden werden üblicherweise Lochblenden verwendet. Hinter dem Laser 3 sind ein Strahlteiler 23 und ein Spiegel 24 zum Aufteilen des von dem Laser 3 kommenden Strahls in zwei Stimulationslichtstrahlen 17 angeordnet. Die Anordnung ist so gewählt, daß der Anregungslichtstrahl und die Stimulationslichtstrahlen derart auf den Spiegel 4 auftreffen, daß sich die Intensitätsverteilungen der Strahlen nach Umlenken an dem Spiegel 5 und Durchlaufen des Objektivs 6 im Fokalbereich des Objektivs 6 teilweise decken.

In dem gezeigten Ausführungsbeispiel sind zwei Stimulationslichtstrahl gezeigt. Es können aber auch nur ein oder noch weitere Stimulationslichtstrahlen verwendet werden. Hierzu können entweder weitere Laser mit zu dem Strahlengang des Lasers 3 analogen Strahlengängen verwendet werden, wobei die Strahlen in geeigneter Weise auf den Spiegel 4 und von dort über den Spiegel 5 und das Objektiv 6 auf den Probenpunkt 7 gelenkt werden. Es kann aber auch wie gezeigt ein Laser 3 verwendet werden, und der von dem Laser 3 kommende Stimulationslichtstrahl über weitere Strahlteiler in einzelne Stimulationslichtstrahlen zerlegt werden. Wichtig ist, daß die Stimulationslichtstrahlen alle derart angeordnet sind, daß sich ihre Intensitätsverteilungen im Fokalbereich des Objektivs 6 teilweise mit der Intensitätsverteilung des Anregungslichtstrahls decken. Die Laser 3 bzw. die dazugehörigen nicht dargestellten Strahlelemente, wie Strahlteiler, Linsen, etc. müssen derart angeordnet sein, daß sich eine gewünschte vorherbestimmte Anordnung der Intensitätsverteilungen im Fokalbereich des Objektivs 6 ergibt. Z. B. können verschieden Stimulationslichtstrahlen auf einem Kreisring angeordnet sein, durch dessen Mittelpunkt der von dem Laser 2 kommende Anregungslichtstrahl 16 verläuft.

In dem Punkt 7 wird der Energiezustand der Probe 8 mit dem dort auftreffenden Anregungslichtstrahl 16 angeregt. Die Wellenlänge des Anregungslichts ist geeignet zum Anregen dieses Energiezustandes gewählt. Durch Auftreffen des von dem Laser 3 kommenden Stimulationslichtstrahl 17 wird der mit dem Anregungslicht angeregte Energiezustand der Probe 8 über stimulierte Emission in einem tieferliegenden Zustand abgeregt. Hierzu kann der Laser 3 das Stimulationslicht als Lichtpulse zeitlicher Abfolge aussenden. Das von der Probe 8 spontan emittierte Emissionslicht wird durch das Objektiv 6 und den Spiegel 5 in den Detektor 9 gelenkt und dort nachgewiesen. In der gezeigten Darstellung wird das Emissionslicht zum Nachweis in dem Detektor 9 von dem Anregungslicht 16 durch den dichroitischen Spiegel 5 getrennt. Dies ist möglich, da in der Regel das Anregungslicht 16 eine andere Wellenlänge hat als das Emissionslicht 18. Zur weiteren Verbesserung der Selektion des Emissionslichts 18 aufgrund seiner Wellenlänge ist vor dem Detektor 9 ein Farbfilter 19 angeordnet.

Ferner ist ein dem Objektiv 6 vorgeschalteter Polarisator 20 zum Polarisieren des Stimulationslichts 17 und ein dem Objektiv 6 nachgeschalteter Polarisator 21 zum Polarisieren des zum Detektor gehenden Lichts vorgesehen. Die Polarisatoren 20 und 21 haben eine zueinander orthogonale Durchlaßrichtung. Mit Hilfe der Polarisatoren 20 und 21 läßt sich das von der Probe 6 kommende Emissionslicht von dem Stimulationslicht trennen. Die Polarisatoren 20, 21 sind erforderlich, da das Stimulationslicht und das Emissionslicht gleiche Wellenlängen aufweisen und somit nicht durch Farbfilter voneinander trennbar sind. Ferner ist dem Farbfilter 19 und dem Polarisator 21 eine Lochblende 15 vorgeschaltet, die sich in einer zur Fokalebene des Objektivs optisch konjugierten Ebene befindet. Alternativ kann das von der Probe kommende Emissionslicht von dem stimulationslicht bzw. dem Anregungslicht durch eine nicht dargestellte Zeitsteuerungseinrichtung getrennt werden. Dies ist dann möglich, wenn der Laser 3 Stimulationslichtpulse in zeitlicher Abfolge und der Laser 2 Anregungslichtpulse in zeitlicher Abfolge aussenden. Die Zeitsteuerungseinrichtung muß den Detektor unmittelbar nach Abklingen eines Pulses des Stimulationslichts einschalten. Auf diese Weise kann das Emissionslicht einfach und zuverlässig von dem Stimulationsiichts getrennt werden. Das Filter 19 und Polarisatoren 20, 21 können je nach Bedarf zusätzlich wie in Figur 1 gezeigt, angeordnet werden.

Der Strahlrastereinrichtung 11 ist eine Linse 22 vorgeschaltet, mit der der Anregungslichtstrahl 16 und die Stimulationslichtstrahlen 17 in die Strahlrastereinrichtung 11 fokussiert werden. Mit der Strahlrastereinrichtung 11 werden der Anregungslichtstrahl 16 und der Stimulationslichtstrahl 17 so gesteuert, daß sie die Punkte 7, 7',... der Probe 8 in einer gevtünschten Reihenfolge abrastern. In jedem der Punkte 7, 7' wird die oben beschriebene Messung durchgeführt.

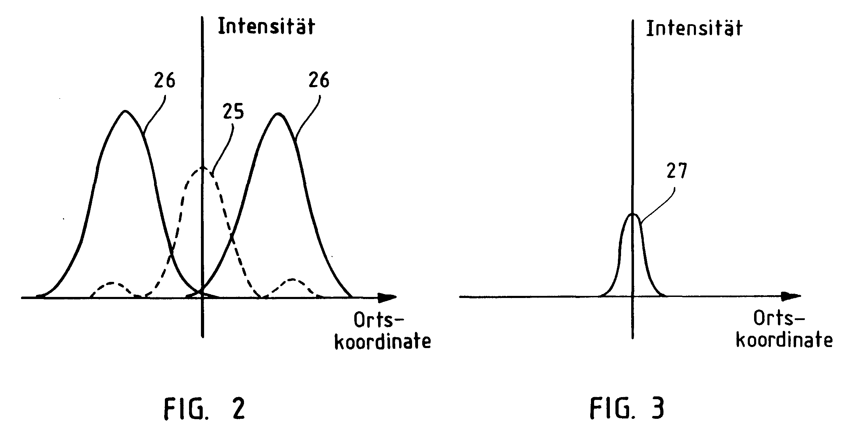

In Figur 2 sind die Intensitätsverteilung 25 des Anregungslichtstrahls und die Intensitätsverteilungen 26 zweier Stimulationslichtstrahlen 17 dargestellt. Die Intensitätsverteilung 25 des Anregungslichtstrahls 16 hat ein Hauptmaximum und dazu symmetrische Nebenmaxima in lateraler Richtung. Die Intensitätsverteilung 26 der Stimulationsstrahlen 17 sind jeweils gaußförmig. Die Maxima der Gaußverteilungen des Stimulationslichts sind hinsichtlich des Maximums der Intensitätsverteilung 25 des Anregungslichtes lateral versetzt. Es ist eine symmetrische Anordnung gewählt, bei der die beiden Stimulationslichtstrahlen in entgegengesetzte Richtung mit gleichem Abstand hinsichtlich der Mittelachse durch die Intensitätsverteilung 25 des Anregungslichts verschoben sind. Die Intensität des Stimulationslichts ist deutlich größer als die Intensität des Anregungslichts. Die Intensität des Stimulationslichtstrahls ist so gewählt, daß zwischen dieser Intensität und der Besetzung des Energiezustandes der Probe ein nichtlinearer Zusammenhang besteht.

In Figur 3 ist die effektive Punktabbildungsfunktion in der Fokalebene des Objektivs dargestellt, in welche die Intensitätsverteilungen der Figur 2 eingehen. Die effektive Punktabbildungsfunktion bestimmt die Ortsauflösung eines Rastermikroskops. Wie man der Figur entnimmt, weist die resultierende effektive Punktabbildungsfunktion ein Maximum auf, dessen Halbwertsbreite deutlich schmaler ist als die Halbwertsbreite der Intensitätsverteilung des Anregungslichts, vergleiche Figur 2. Zudem sind durch die Gesamtwirkung der in Figur 2 dargestellten Intensitätsverteilungen die in dem Anregungslicht enthaltenen Nebenmaxima eliminiert. Aufgrund des Zusammenwirkens des Anregungslichtstrahls und der Stimulationslichtstrahlen erhält man also eine effektive Punktabbildungsfunktion mit einer erheblichen Verbesserung in der lateralen Auflösung, da sowohl die Halbwertsbreite der effektiven Punktabbildungsfunktion erheblich reduziert wird, als auch die in der Intensitätsverteilung des Anregungslichts enthaltenen Nebenmaxima eliminiert werden, verglichen mit der effektiven Punktabbildungsfunktion eines herkömmlichen Fluoreszenzmikroskops, die identisch mit der Intensitätsverteilung des Anregungslichtes im Fokalbereich des Objektive? ist. Aufgrund von Rechenergebnissen kann durch das erfindungsgemäße Verfahren die laterale Auflösung eines Rastermikroskops um etwa einen Faktor 5 verbessert werden. Die in den Fig. 2 und 3 dargestellten Kurven sind eine prinzipielle, nicht maßstabsgetreue Darstellung.

Im folgenden wird das erfindungsgemäße Verfahren anhand der Figur 1 beschrieben. In dem dort gezeigten Rastermikroskop wird mit dem Positioniertisch 10 die Probe 8 in eine bestimmte Position der optischen Achse A gebracht. Die Laser 2, 3 sowie die Linsen 12, 13, die Blende 14, der Strahlteiler 23 und der Spiegel 24 werden so angeordnet, daß die Stimulationslichtstrahlen 17 und der Anregungslichtstrahl 16 von dem Spiegel 5 und dem Objektiv 6 auf einen gewählten Probenpunkt 7 gelenkt werden. Die Stimulationslichtstrahlen 17 werden so ausgerichtet, daß ihre Intensitätsverteilungen sich im Fokalbereich des Objektivs 6 mit der Intensitätsverteilung des Anregungslichtstrahls 16 auf eine gewünschte Weise decken. Das Filter 19 und die Polarisatoren 20, 21 werden so angeordnet, daß das von der Probe in dem Probenpunkt 7 emittierte Emissionslicht von dem Anregungslicht und dem Separationslicht heraussepariert und in den Detektor 9 gelenkt und dort nachgewiesen wird. Nach dieser Messung wird ein neuer Probenpunkt 7' ausgewählt. Hierzu werden der Anregungslichtstrahl 16 und der Stimulationslichtstrahl 17 auf den Probenpunkt 7' gelenkt. Dort erfolgt die Messung auf die gleiche Weise wie in dem Probenpunkt 7. Danach werden der Anregungslichtstrahl 16 und die Stimulationslichtstrahlen 17 von der Strahlrastereinrichtung 11 auf einen weiteren Probenpunkt gelenkt, bis die Probe 8 in dem gewünschten Bereich in lateraler Richtung abgerastert und gemessen ist. Dann wird der Positioniertisch 10 in Richtung der optischen Achse A verschoben. In dieser Stellung der Probe 8 beginnt wiederum der gesamte Meßablauf, Auf diese Weise kann die Probe 8 dreidimensional abgerastert und gemessen werden.

## Patentansprüche

1. Vorrichtung zum optischen Messen eines Probenpunkts (7) einer Probe (8) mit hoher Ortsauflösung,
mit einer Lichtquelle (1) zum Aussenden eines zum Anregen eines Energiezustands der Probe (8) geeigneten Anregungslichtstrahls (16),
einem Objektiv (6) zum Fokussieren des Anregungslichtstrahls (16) auf den Probenpunkt (7) der im Fokalbereich des Objektivs (6) anordbaren Probe (8),
einer Separationseinrichtung zum Herausseparieren des von der Probe (8) aufgrund der Anregung des Energiezustands spontan abgestrahlten Emissionslichts (18) und
einem Detektor (9) zum Nachweis des spontan abgestrahlten Emissionslichts (18),
**dadurch gekennzeichnet,**
daß die Lichtquelle (1) auch zur Aussendung eines Stimulationslichtstrahls (17) zum Erzeugen stimulierter Emission der von dem Anregungslichtstrahl (16) angeregten Probe (8) in dem Probenpunkt (7) vorgesehen ist,
wobei die Lichtquelle (1) den Anregungslichtstrahl (16) und den Stimulationslichtstrahl (17) derart versetzt zueinander anordnet, daß sich ihre Intensitätsverteilungen (25, 26) im Fokalbereich des Objektivs (6) teilweise überdecken, um die Probe (8) im Bereich der Überdeckung mit dem Stimulationslichtstrahl (17) wieder abzuregen.

2. Vorrichtung nach Anspruch 1
wobei
die Probe (8) auf einem Positioniertisch (10) angeordnet ist, mit dem eine mechanische Rasterbewegung zumindest in Richtung der optischen Achse (A) durchführbar ist.

3. Vorrichtung nach einem der vorangehenden Ansprüche,
wobei
zwischen der Lichtquelle (i) und dem Objektiv (6) eine Strahlrastereinrichtung (11) zum gesteuerten Abrastern der Probe (8) mit dem Anregungslichtstrahl (16) und dem Stimulationslichtstrahl (17) vorgesehen ist.

4. Vorrichtung nach einem der vorangehenden Ansprüche,
wobei
der Stimulationslichtstrahl (17) hinsichtlich des Anregungslichtstrahls (16) in der Fokalebene lateral versetzt ist.

5. Vorrichtung nach einem der vorangehenden Ansprüche,
wobei
der Stimulationslichtstrahl (17) hinsichtlich des Anregungslichtstrahls (16) entlang der optischen Achse versetzt ist.

6. Vorrichtung nach einem der vorangehenden Ansprüche,
wobei
wenigstens ein weiterer von der Lichtquelle (1) kommender Stimulatiönslichtsrahl (17) vorgesehen ist, dessen Intensitätsverteilung (26) im Fokalbereich des Objektivs (6) von der Intensitätsverteilung (26) der übrigen Stimulationslichtstrahlen verschieden ist.

7. Vorrichtung nach Anspruch 6,
wobei
die Stimulationslichtstrahlen (17) hinsichtlich des Anregungslichtstrahls (16) räumlich symmetrisch angeordnet sind.

8. Vorrichtung nach einem der vorangehenden Ansprüche,
wobei
die Lichtquelle (1) einen Laser umfaßt, der Lichtanteile unterschiedlicher Wellenlängen emittiert.

9. Vorrichtung nach einem der vorangehenden Ansprüche,
wobei
die Lichtquelle (1) wenigstens zwei Laser (2, 3) umfaßt, die Licht unterschiedlicher Wellenlängen emittieren.

10. Vorrichtung nach einem der vorangehenden Ansprüche,
wobei
wenigstens ein Dauerstrichlaser (2) vorgesehen ist, der das Anregungslicht aussendet.

11. Vorrichtung nach einem der vorangehenden Ansprtche,
wobei
wenigstens ein Laser (2, 3) vorgesehen ist, der Lichtpulse zeitlicher Abfolge aussendet.

12. Vorrichtung nach Anspruch 11,
wobei
ein Laser (3), der Lichtpulse zeitlicher Abfolge aussendet, das Stimulationslicht erzeugt.

13. Vorrichtung nach einem der vorangehenden Ansprüche,
wobei
der Laser (3) zur Erzeugung des Stimulationslichts einen Lichtstrahl mit einem Gauß-förmigen Profil aussendet.

14. Vorrichtung nach einem der vorangehenden Ansprüche mit einem Probe,
wobei
die Lichtquelle (1) zur Erzeugung der stimulierten Emission von hoher Intensität ist, so daß zwischen dieser Intensität und der Besetzung des Energiezustandes der Probe ein nichtlinearer Zusammenhang besteht.

15. Vorrichtung nach einem der vorangehenden Ansprüche,
wobei
die Separationseinrichtung eine Zeitsteuerungseinrichtung umfaßt, mit der der Detektor (9) unmittelbar nach Abklingen eines Pulses des Stimulationslichts eingeschaltet werden kann.

16. Vorrichtung nach einem der vorangehenden Ansprüche,
wobei
die Separationseinrichtung ein dem Objektiv (6) vorgeschaltetes Polarisationselement (20) zum Polarisieren des Stimulationslichts und ein dem Objektiv nachgeschaltetes Polarisationselement (21) zum Polarisieren des zum Detektor (9) gehenden Lichts mit einer orthogonalen Durchlaßrichtung zu der des dem Objektiv (9) vorgeschalteten Polarisationselement (20) umfaßt.

17. Vorrichtung nach einem der vorangehenden Ansprüche,
wobei
die Separationseinrichtung wenigstens ein Wellenlängenfilter (19) aufweist.

18. Vorrichtung nach einem der vorangehenden Ansprüche,
wobei
die Separationseinrichtung einen dichroitischen Spiegel (5) aufweist.

19. Vorrichtung nach einem der vorangehenden Ansprüche,
wobei
der Detektor (9) ein Punktdetektor ist, der in einer zur Fokalebene des Objektivs (6) optisch konjugierten Ebene angeordnet ist.

20. Vorrichtung nach einem der vorangehenden Ansprüche,
wobei
dem Detektor (9) ein Fokussierungselement und eine Blende (15) vorgeschaltet sind, wobei die Blende (15) in einer zur Fokalebene des Objektivs (6) optisch konjugierten Ebene angeordnet ist.

21. Vorrichtung nach einem der vorangehenden Ansprüche,
wobei
zwischen der Lichtquelle (1) und dem Objektiv (6) ein für die Wellenlänge des Stimulationslichts durchlässiges Filterelement angeordnet ist, welches für die Wellenlänge des Anregungslichts einen undurchlässigen Mittenbereich und einen durchlässigen Außenbereich aufweist.

22. Verfahren zum optischen Messen eines Probenpunkts (7) einer Probe (8) mit hoher Ortsauflösung,
bei dem ein Anregungslichtstrahl (16) auf den zu messenden Probenpunkt (7) mittels eines Objektivs (6) fokussiert wird und dort einen Energiezustand der Probe (8) anregt
und bei dem das von dem Probenpunkt (7) aufgrund der Anregung des Energiezustands spontan emittierte Emissionslicht (18) heraussepariert und nachgewiesen wird,
**dadurch gekennzeichnet,**
daß die von dem Anregungslichtstrahl (16) angeregte Probe (8) in dem Probenpunkt (7) durch einen Stimulationslichtstrahl (17) zu stimulierter Emission veranlaßt wird,
wobei die Intensitätsverteilungen (25, 26) des Anregungslichtstrahls (16) und des Stimulationslichtstrahls (17) im Fokalbereich des Objektivs (6) versetzt zueinander angeordnet werden, so daß sie sich teilweise überdecken, um mit dem Stimulationslichtstrahl (17) die Probe (8) im Bereich der Überdeckung wieder abzuregen.

23. Verfahren nach einem der vorangehenden Ansprüche,
wobei
die Probe (8) mit dem Anregungslichtstrahl (16) und dem Stimlationslichtstrahl (17) abgerastert wird.

## Claims

1. Device for optically measuring a sample point (7) of a sample (8) with high spatial resolution, the device comprising
a light source (1) for emitting an exciting beam of light (16) suitable for exciting an energy state of the sample (8),
an objective (6) for focusing the exciting beam of light (16) on the sample point (7) of the sample (8) which is arrangeable in the focal field of the objective (6),
separating means for separating the emitted light (18) radiated by the sample (8) owing to the excitation of the energy state, and
a detector (9) for determining the spontaneously radiated emitted light,
**characterized**
in that the light source (1) is also provided for emitting a stimulating beam of light (17) for producing stimulated emission by the sample (8) being excited by the exciting beam of light (16) in the sample point (7),
the light source (1) arranging the exciting beam of light (16) and the stimulating beam of light (17) in such an offset manner that their intensity distributions (25, 26) partly overlap in the focal field of the objective (6) to reset the sample (8) within the overlapping area by means of the stimulating beam of light (17).

2. Device according to claim 1,
wherein the sample (8) is arranged on a positioning stage (10) by which a mechanical scanning movement is accomplishable at least in direction of the optical axis (A).

3. Device according to any of the preceding claims,
wherein a beam scanning means (11) for scanning the sample (8) with the exciting beam of light (16) and the stimulating beam of light (17) in a controlled manner is provided between the light source (1) and the objective (6).

4. Device according to any of the preceding claims,
wherein the stimulating beam of light (17) is laterally offset within the focal plane with regard to the exciting beam of light (16).

5. Device according to any of the preceding claims,
wherein the stimulating beam of light (17) is offset along the optical axis with regard to the exciting beam of light (16).

6. Device according to any of the preceding claims,
wherein at least one further stimulating beam of light (17) coming from the light source (1) is provided, the intensity distribution of which differs from the intensity distribution (26) of the other stimulation beam of lights in the focal field of the objective (6).

7. Device according to claim (6),
wherein the stimulating beams of light (17) are arranged in an spatial symmetrical way with regard to the exciting beam of light (16).

8. Device according to any of the preceding claims,
wherein the light source (1) includes a laser which emits parts of light at different wave lengths.

9. Device according to any of the preceding claims,
wherein the light source (1) includes at least two lasers (2, 3) which emit light at different wave lengths.

10. Device according to any of the preceding claims,
wherein at least one continuous wave laser (2) is provided which emits the exciting light.

11. Device according to any of the preceding claims,
wherein at least one laser (2, 3) is provided, which emits light pulses in a timed succession.

12. Device according to claim 11,
wherein the laser (3) emitting the light pulses in the timed succession produces the stimulating light.

13. Device according to any of the preceding claims,
wherein the laser (3) for producing the stimulating light emits a beam of light having a Gauß-shaped profile.

14. Device according to any of the preceding claims with a sample,
wherein the light source (1) for producing the stimulated emission is of high intensity so that there is a non-linear correlation between this intensity and the population of the energy state of the sample.

15. Device according to any of the preceding claims,
wherein the separating means includes a time control means by which the detector is turned on directly after decaying of one pulse of the stimulating light.

16. Device according to any of the preceding claims,
wherein the separating means includes a polarizing element (20) arranged upstream from the objective (6) for polarizing the stimulating light and a polarizing element (21) arranged downstream from the objective (6) for polarizing the light on its way to the detector (9), the polarizing element (21) arranged downstream from the objective (6) having a transmission direction running perpendicular to the transmission direction of the polarizing element (20) arranged upstream from the objective (6).

17. Device according to any of the preceding claims,
wherein the separating device includes at least one wave length filter (19).

18. Device according to any of the preceding claims, wherein the separating device comprises a dichroic mirror (5).

19. Device according to any of the preceding claims,
wherein the detector (9) is a point detector, which is arranged in a plane being optically conjugated to the focal plane of the objective (6).

20. Device according to any of the preceding claims,
wherein a focusing element at an aperture (15) are arranged upstream the detector (9), the aperture (15) being arranged in a plane optically conjugated to the focal plane of the objective (6).

21. Device according to any of the preceding claims,
wherein a filter element transmissive for the wave length of the stimulating light is arranged between the light source (1) and the objective (6), the filter element having an non-transmissive centre portion and an transmissive outer portion for the wave length of the exciting light.

22. Method for optically measuring a sample point (7) of a sample (8) with high spatial resolution, comprising the steps of
focusing an exciting beam of light (16) on the sample point (7) to be measured by means of an objective (6), the exciting beam of light exciting an energy state of the sample (8), and
separating and determining the emitted light (18) spontaneously emitted by the sample point (7) owing to the excitation of the energy state,
**characterized**
in that the sample (8) excited by the exciting beam of light (16) is brought to stimulated emission in the sample points (7) by a stimulating beam of light (17),
the intensity distributions (25, 26) of the exciting beam of light (16) and the stimulating beam of light (17) are arranged with an offset in the focal field of the objective (6) so that they partially overlap to reset the sample (8) in the overlapping region by means of the stimulating beam of light (17).

23. Method according to any of the preceding claims
**characterized**
in that the sample (8) is scanned with the exciting beam of light (16) and the stimulating beam of light (17).

## Revendications

1. Dispositif de mesure optique d'un point échantillon (7) d'un échantillon (8) avec une résolution locale élevée,
avec une source lumineuse (1) pour émettre un faisceau lumineux d'excitation (16) convenant à l'excitation d'un état d'énergie de l'échantillon (8),
un objectif (6) pour focaliser le faisceau lumineux d'excitation (16) sur le point échantillon (7) de l'échantillon (8) pouvant être disposé dans la zone focale de l'objectif (6),
un dispositif de séparation pour séparer et extraire la lumière d'émission (18) rayonnée spontanément par l'échantillon (8) du fait de l'excitation de l'état d'énergie et un détecteur (9) de décèlement de la lumière d'émission (18) rayonnée spontanément,
caractérisé en ce que
la source lumineuse (1) est agencée pour émettre également un faisceau lumineux de stimulation (17) pour engendrer une émission stimulée dans le point échantillon (7) de l'échantillon (8) excité par le faisceau lumineux d'excitation (16),
la source lumineuse (1) disposant le faisceau lumineux d'excitation (16) et le faisceau lumineux de stimulation (17) décalés l'un par rapport à l'autre de telle manière que leurs répartitions d'intensité (25, 26) se recouvrent partiellement dans la zone focale de l'objectif (6) pour exciter à nouveau l'échantillon (8) par le faisceau lumineux de stimulation (17) dans la zone du recouvrement.

2. Dispositif selon la revendication 1,
dans lequel l'échantillon (8) est disposé sur une table de positionnement (10) par laquelle un déplacement de grille mécanique peut être effectué au moins dans la direction de l'axe optique (A).

3. Dispositif selon l'une des revendications précédentes,
dans lequel un dispositif de grille de faisceau (11) est disposé entre la source lumineuse (1) et l'objectif (6) pour le tramage commandé de l'échantillon (18) avec le faisceau lumineux d'excitation (16) et le faisceau lumineux de stimulation (17).

4. Dispositif selon l'une des revendications précédentes,
dans lequel le faisceau lumineux de stimulation (17) est décalé latéralement dans le plan focal par rapport au faisceau lumineux d'excitation (16).

5. Dispositif selon l'une des revendications précédentes,
dans lequel le faisceau lumineux de stimulation (17) est décalé le long de l'axe optique par rapport au faisceau lumineux d'excitation (16).

6. Dispositif selon l'une des revendications précédentes,
dans lequel est prévu au moins un autre faisceau lumineux de stimulation (17) venant de la source lumineuse (1) et dont la répartition d'intensité (26) dans la zone focale de l'objectif (6) est différente de la répartition d'intensité (26) des faisceaux lumineux de stimulation restants.

7. Dispositif selon la revendication 6,
dans lequel les faisceaux lumineux de stimulation (17) sont disposés spatialement symétriques par rapport au faisceau lumineux d'excitation (16).

8. Dispositif selon l'une des revendications précédentes,
dans lequel la source lumineuse (1) comprend un laser qui émet des fractions de lumière de longueurs d'onde différentes.

9. Dispositif selon l'une des revendications précédentes,
dans lequel la source lumineuse (1) comprend au moins deux lasers (2, 3) qui émettent des lumières de longueurs d'onde différentes.

10. Dispositif selon l'une des revendications précédentes,
dans lequel est prévu au moins un laser à onde entretenue qui émet la lumière d'excitation.

11. Dispositif selon l'une des revendications précédentes,
dans lequel est prévu au moins un laser (2, 3) qui émet des impulsions lumineuses en succession chronologique.

12. Dispositif selon la revendication 11,
dans lequel un laser (3), qui émet des impulsions lumineuses en succession chronologique, génère la lumière de stimulation.

13. Dispositif selon l'une des revendications précédentes,
dans lequel le laser (3) pour générer la lumière de stimulation émet un faisceau lumineux à profil gaussien.

14. Dispositif selon l'une des revendications précédentes avec un échantillon,
dans lequel la source lumineuse (1) pour engendrer l'émission stimulée est d'intensité plus élevée de telle sorte qu'il existe une corrélation non linéaire entre cette intensité et l'occupation de l'état d'énergie de l'échantillon.

15. Dispositif selon l'une des revendications précédentes,
dans lequel le dispositif de séparation comprend un dispositif de commande de temps par lequel le détecteur (9) peut être mis en circuit immédiatement après l'évanouissement d'une impulsion de la lumière de stimulation.

16. Dispositif selon l'une des revendications précédentes,
dans lequel le dispositif de séparation comprend un élément de polarisation (20) intercalé avant l'objectif (6) pour polariser la lumière de stimulation et un élément de polarisation (21) intercalé après l'objectif pour polariser la lumière allant vers le détecteur (9), avec une direction de passage orthogonale à celle de l'élément de polarisation (20) intercalé avant l'objectif (9).

17. Dispositif selon l'une des revendications précédentes,
dans lequel le dispositif de séparation présente au moins un filtre de longueurs d'onde (19).

18. Dispositif selon l'une des revendications précédentes,
dans lequel le dispositif de séparation présente un miroir dichroïque (5).

19. Dispositif selon l'une des revendications précédentes,
dans lequel le détecteur (9) est un détecteur ponctuel qui est disposé dans un plan conjugué optiquement au plan focal de l'objectif (6).

20. Dispositif selon l'une des revendications précédentes,
dans lequel un élément de focalisation et un obturateur (15) sont intercalés avant le détecteur (9), l'obturateur (15) étant disposé dans un plan conjugué optiquement au plan focal de l'objectif (6).

21. Dispositif selon l'une des revendications précédentes,
dans lequel, entre la source lumineuse (1) et l'objectif (6), est disposé un élément de filtre transparent pour la longueur d'onde de la lumière de stimulation, qui présente une zone médiane opaque pour la longueur d'onde de la lumière d'excitation et une zone extérieure transparente.

22. Procédé de mesure optique d'un point échantillon (7) d'un échantillon (8) avec une résolution locale élevée,
dans lequel un faisceau lumineux d'excitation (16) est focalisé sur le point échantillon (7) à mesurer au moyen d'un objectif (6) et y excite un état d'énergie de l'échantillon (8),
et dans lequel la lumière d'émission (18) émise spontanément par le point échantillon (7) du fait de l'excitation de l'état d'énergie est séparée-extraite et
décelée,
caractérisé en ce que
l'échantillon (8) excité par le faisceau lumineux d'excitation (16) est entraîné à une émission stimulée par un faisceau lumineux de stimulation (17) au point échantillon (7),
les répartitions d'intensité (25, 26) du faisceau lumineux d'excitation (16) et du faisceau lumineux de stimulation (17) étant disposées décalées l'une par rapport à l'autre dans la zone focale de l'objectif (6) de telle sorte qu'elles se recouvrent partiellement, pour exciter à nouveau l'échantillon (8) par le faisceau lumineux de stimulation (17) dans la zone du recouvrement.

23. Procédé selon l'une des revendications précédentes,
dans lequel l'échantillon (8) est tramé avec le faisceau lumineux d'excitation (16) et le faisceau lumineux de stimulation (17).
